# EUROPÄISCHE PATENTSCHRIFT

(11) **EP 1 880 124 B1**
(45) Veröffentlichungstag und Bekanntmachung des Hinweises auf die Patenterteilung: **11.03.2009**
(21) Anmeldenummer: 06724364.2
(22) Anmeldetag: 15.04.2006
(51) Int. Cl.: F16H 57/02

(54) **MEHRGRUPPENGETRIEBE**
MULTI-GROUP GEARBOX
BOITE DE VITESSES MULTIGROUPE

(30) Priorität: 11.05.2005 DE 102005021762
(43) Veröffentlichungstag der Anmeldung: 23.01.2008
(73) Patentinhaber: ZF Friedrichshafen AG, 88038 Friedrichshafen (DE)
(72) Erfinder: RENNER, Stefan, 78351 Bodman-Ludwigshafen (DE); BADER, Josef, 88045 Friedrichshafen (DE)
(86) Internationale Anmeldenummer: PCT/EP2006/003492
(87) Internationale Veröffentlichungsnummer: WO 2006/119839

(56) Entgegenhaltungen:
- WO-A-90/10806
- DE-A1- 10 250 561
- DE-A1- 10 343 992
- US-B1- 6 279 422

## Beschreibung

Die vorliegende Erfindung betrifft ein Mehrgruppengetriebe gemäß dem Oberbegriff des Patentanspruchs 1.

Getriebe für Nutzkraftfahrzeuge weisen häufig zwölf, sechzehn oder mehr Gänge auf. Derartige Vielganggetriebe sind meist als Mehrgruppengetriebe ausgestaltet, die sich in eine Vorschaltgruppe, eine Hauptgruppe bzw. ein Hauptgetriebe und eine Bereichsgruppe aufteilen. Um den durch die Vielzahl der Gänge entstehenden komplexen Schaltablauf zu erleichtern, weisen die meisten dieser Getriebe eine mittels eines Getriebestellers automatisierte Schalteinrichtung auf. Dabei können die Schaltungen in der Vorschaltgruppe und in der Bereichsgruppe pneumatisch erfolgen, während die Schaltungen im Hauptgetriebe manuell vom Fahrzeugführer durchgeführt werden oder mittels geeigneter elektrohydraulischer, elektropneumatischer und elektromotorischer Stelleinrichtungen oder einer Kombination aus diesen Aktuatoren automatisiert ablaufen.

Aus der WO 90/10806 der Anmelderin, das den nächstliegenden Stand der Technik repräsentiert ist ein Gesamtgetriebegehäuse eines Mehrgruppengetriebes bekannt, an dem ein Gruppengetriebe angeordnet ist, wobei ein Element der Schaltkupplung sich über eine Zwischenplatte am Getriebegehäuse abstützt. Diese Zwischenplatte ist zwischen den separaten Gehäuseteilen des Hauptgetriebes und des Gruppengetriebes zwischengeklemmt.

Aus der EP 0 694 135 B1 der Anmelderin ist eine Anordnung eines Gruppengetriebes am Gesamtgetriebegehäuse bekannt, wobei eine Schaltkupplung durch eine lösbare Zwischenplatte vom übrigen Gehäuse getrennt ist und sich ein Teil der Schaltkupplung an der lösbaren Zwischenplatte abstützt. Bei dieser Konstruktion stützt sich sie Zwischenplatte über Lagerelemente von Getrieberädern am Getriebegehäuse ab.

Bei den aus dem Stand der Technik bekannten Konstruktionen sind drei große Gehäuse für das Gesamtgetriebe erforderlich, nämlich ein erstes Gehäuse, umfassend die Kupplungsglocke, ein zweites Gehäuse, umfassend eine Zwischenwand bzw. Zwischenplatte zur Aufnahme der Vorgelegewellenlagerung, und ein drittes Gehäuse für die Nachschaltgruppe, die beispielsweise in Planetenbauweise ausgeführt sein kann. Dies resultiert in nachteiliger Weise in hohen Herstellungs- und Montagekosten sowie in zwei Verschraubungen und Dichtungen.

Der vorliegenden Erfindung liegt die Aufgabe zugrunde, ein Mehrgruppengetriebe anzugeben, bei dem die Anzahl der benötigten Gehäuse für das Gesamtgetriebe reduziert wird, ohne die Funktionalität des Getriebes zu beeinträchtigen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Mehrgruppengetriebe, umfassend eine Vorschaltgruppe mit mindestens einer Vorgelegewelle, ein Hauptgetriebe und eine Bereichs- bzw. Nachschaltgruppe vorgeschlagen, dessen Gesamtgetriebegehäuse aus zwei Gehäusen besteht, wobei die Zwischenplatte zur Aufnahme der Vorgelegewellenlagerung in einem Gehäuse mittels Befestigungselementen, beispielsweise über Bolzenverbindungen, eingebaut ist.

Im Rahmen einer vorteilhaften Weiterbildung der Erfindung ist vorgesehen, dass die Bereichsgetriebe-Abstützplatte über die gleichen Bolzenverbindungen gehalten ist. Ferner wird vorgeschlagen, die Lagerung des Zwischenrades für den Rückwärtsgang in der Zwischenplatte anzuordnen, wobei dies über Druckguss erfolgen kann.

Durch die erfindungsgemäße Konzeption wird in vorteilhafter Weise nur eine Gehäuseverschraubung und eine entsprechende Dichtung benötigt.

Die Erfindung wird im Folgenden anhand der beigefügten Figuren beispielhaft näher erläutert.

Es zeigen:
- Fig. 1: eine schematische Schnittansicht durch einen Teil eines Mehrgruppengetriebes gemäß der Erfindung und
- Fig. 2: eine schematische Schnittansicht des Zwischenrades für den Rückwärtsgang und dessen Lagerung gemäß der Er- findung.

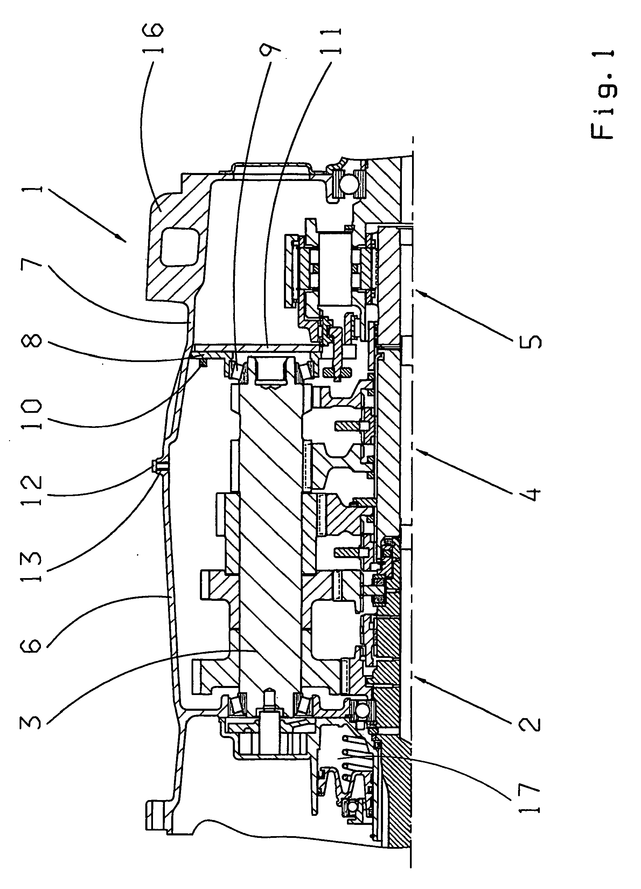

In Fig. 1 ist das Gesamtgetriebe mit 1 bezeichnet. Es umfasst eine Vorschaltgruppe 2 mit mindestens einer Vorgelegewelle 3, ein Hauptgetriebe 4 und eine Bereichs- bzw. Nachschaltgruppe 5. Der Kupplungssteller ist mit dem Bezugszeichen 17 versehen. Es sind gemäß der Erfindung zwei Gehäuse 6, 7 vorgesehen, die das Gesamtgetriebegehäuse bilden.

Hierbei ist die Zwischenplatte 8 zur Aufnahme der Vorgelegewellenlagerung 9 in einem Gehäuse 7, beispielsweise über Bolzenverbindungen 10 eingebaut. Wie aus Fig. 1 ersichtlich, kann gemäß der Erfindung vorgesehen sein, dass die Bereichsgruppe-Abstützplatte 11 über die gleichen Bolzenverbindungen 10 gehalten ist.

Durch diesen Aufbau, der zwei Gehäuse 6, 7 benötigt, ist lediglich eine Gehäuseverschraubung 12 zwischen den Gehäusen 6, 7 und eine entsprechende Dichtung 13 erforderlich. Des weiteren kann die Anordnung von Gehäuseaufhängungen 16 im Fahrzeug günstig realisiert werden.

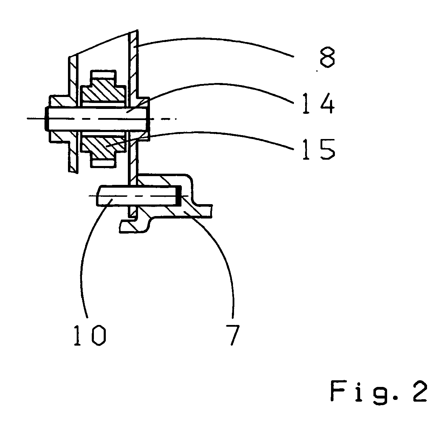

Im Rahmen einer vorteilhaften Weiterbildung kann zudem vorgesehen sein, die Lagerung 14 des Zwischenrades 15 für den Rückwärtsgang in der Zwischenplatte 8 anzuordnen, wie in Fig. 2 schematisch dargestellt.

Im Bereich der Verbindung der Zwischenplatte 8 an das Gehäuse 7 kann vorteilhafterweise hier nicht gezeigtes Dämpfungsmaterial angeordnet sein, das eine Geräuschabkopplung zwischen den Bauteilen ermöglicht.

### Bezugszeichen

- 1: Gesamtgetriebe
- 2: Vorschaltgruppe
- 3: Vorgelegewelle
- 4: Hauptgetriebe
- 5: Nachschaltgruppe
- 6: Gehäuse
- 7: Gehäuse
- 8: Zwischenplatte
- 9: Vorgelegewellenlagerung
- 10: Bolzenverbindung
- 11: Bereichsgruppe-Abstützplatte
- 12: Gehäuseverschraubung
- 13: Dichtung
- 14: Lagerung
- 15: Zwischenrad
- 16: Gehäuseaufhängung
- 17: Kupplungssteller

## Patentansprüche

1. Mehrgruppengetriebe (1) mit einem Gesamtgetriebegehäuse, umfassend eine Vorschaltgruppe (2) mit mindestens einer Vorgelegewelle (3), ein Hauptgetriebe (4) und eine Bereichs- bzw. Nachschaltgruppe (5), wobei das Gesamtgetriebegehäuse aus einem ersten und einem zweiten Gehäuse (6, 7) besteht **dadurch gekennzeichnet, dass** in dem zweiten Gehäuse (7) eine Zwischenplatte (8) und eine Bereichsgruppe-Abstützplatte (11) angeordnet sind, wobei in der Zwischenplatte (8) eine Vorgelegewellenlagerung (9) angeordnet ist, und die Zwischenplatte (8) und die Bereichsgruppe-Abstützplatte (11) mittels gleicher Befestigungselemente (10) in dem zweiten Gehäuse (7) befestigt sind.

2. Mehrgruppengetriebe nach Anspruch 1, **dadurch gekennzeichnet, dass** die Vorgelegewelle (3) über die Vorgelegeweilenlagerung (9) und die Zwischenplatte (8) in dem zweiten Gehäuse (7) und über eine weitere Vorgelegewellenlagerung in dem ersten Gehäuse (6) gelagert ist.

3. Mehrgruppengetriebe nach Anspruch 1 oder 2, **dadurch gekennzeichnet, dass** die Befestigungselemente (10) Bolzen sind.

4. Mehrgruppengetriebe nach Anspruch 1, 2 oder 3, **dadurch gekennzeichnet, dass** die Gehäuse (6, 7) miteinander verschraubt sind.

5. Mehrgruppengetriebe nach einem der vorangehenden Ansprüche, **dadurch gekennzeichnet, dass** die Lagerung (14) des Zwischenrades (15) für den Rückwärtsgang in der Zwischenplatte (8) angeordnet ist.

## Claims

1. Multi-group transmission (1) having an overall transmission housing, comprising a front-mounted group (2) with at least one countershaft (3), comprising a main transmission (4) and comprising a range group or rear-mounted group (5), with the overall transmission housing being composed of a first and a second housing (6, 7), **characterized in that** an intermediate plate (8) and a range group support plate (11) are arranged in the second housing (7), with a countershaft bearing arrangement (9) being arranged in the intermediate plate (8), and with the intermediate plate (8) and the range group support plate (11) being fastened in the second housing (7) by means of identical fastening elements (10).

2. Multi-group transmission according to Claim 1, **characterized in that** the countershaft (3) is mounted in the second housing (7) by means of the countershaft bearing arrangement (9) and the intermediate plate (8) and is mounted in the first housing (6) by means of a further countershaft bearing arrangement.

3. Multi-group transmission according to Claim 1 or 2, **characterized in that** the fastening elements (10) are bolts.

4. Multi-group transmission according to Claim 1, 2 or 3, **characterized in that** the housings (6, 7) are screwed to one another.

5. Multi-group transmission according to one of the preceding claims, **characterized in that** the bearing arrangement (14) of the intermediate wheel (15) for the reverse gear is arranged in the intermediate plate (8).

## Revendications

1. Boîte de vitesses à plusieurs groupes (1) avec un carter de boîte de vitesses total, comprenant un groupe de tête (2) avec au moins un arbre intermédiaire (3), une boîte de vitesses principale (4) et un groupe local ou de queue (5), dans laquelle le carter de boîte de vitesses total se compose d'un premier carter (6) et d'un deuxième carter (7), **caractérisée en ce qu'**une plaque intermédiaire (8) et une plaque d'appui (11) du groupe local sont disposées dans le deuxième carter (7), dans laquelle un palier (9) d'arbre intermédiaire est disposé dans la plaque intermédiaire (8) et la plaque intermédiaire (8) et la plaque d'appui (11) du groupe local sont fixées dans le deuxième carter (7) au moyen des mêmes éléments de fixation (10).

2. Boîtes de vitesses à plusieurs groupes selon la revendication 1, **caractérisée en ce que** l'arbre intermédiaire (3) est supporté dans le deuxième carter (7) au moyen du palier (9) d'arbre intermédiaire et de la plaque intermédiaire (8) et dans le premier carter (6) au moyen d'un autre palier d'arbre intermédiaire.

3. Boîte de vitesses à plusieurs groupes selon la revendication 1 ou 2, **caractérisée en ce que** les éléments de fixation (10) sont des boulons.

4. Boîte de vitesses à plusieurs groupes selon la revendication 1, 2 ou 3, **caractérisée en ce que** les carters (6, 7) sont vissés l'un à l'autre.

5. Boîte de vitesses à plusieurs groupes selon l'une quelconque des revendications précédentes, **caractérisée en ce que** le palier (14) de la roue intermédiaire (15) pour la marche arrière est disposé dans la plaque intermédiaire (8).
